# EUROPÄISCHE PATENTSCHRIFT

(11) **EP 0 743 162 B1**
(45) Veröffentlichungstag und Bekanntmachung des Hinweises auf die Patenterteilung: **05.01.2000**
(21) Anmeldenummer: 96106612.3
(22) Anmeldetag: 26.04.1996
(51) Int. Cl.: B29C 47/08

(54) **Spritzkopf für eine Extrusionsanlage der Kautschuk oder Kunststoff verarbeitenden Industrie**
Extrusion head for an extrusion line for the rubber or plastics industry
Tête d'extrusion pour une ligne d'extrusion dans l'industrie de transformation du caoutchouc ou des matières plastiques

(30) Priorität: 15.05.1995 DE 19517246
(43) Veröffentlichungstag der Anmeldung: 20.11.1996
(73) Patentinhaber: Paul Troester Maschinenfabrik, D-30519 Hannover (DE)
(72) Erfinder: Gohlisch, Hans-Joachim, Dipl.-Ing., 30519 Hannover (DE); Rüger, Wolfgang, 31061 Alfeld (DE); Becker, Klaus, 31079 Sibbesse (DE)
(74) Vertreter: Junius, Walther, Dr.

(56) Entgegenhaltungen:
- EP-A- 0 170 874
- EP-A- 0 270 816
- DE-A- 3 637 731
- GB-A- 765 383

## Beschreibung

Die Erfindung betrifft einen Spritzkopf für eine Extrusionsanlage der Kautschuk oder Kunststoff verarbeitenden Industrie, bestehend aus einem an der Extrusionsanlage anzuflanschenden feststehenden Spritzkopfteil und mindestens zwei an der Spritzleiste anliegenden für Reinigungszwecke verschwenkbaren Spritzkopfteilen, die mittels einer Gelenkanordnung an dem feststehenden Teil angelenkt sind und mittels von beidseitig angeordneten Kolbenzylindereinheiten am feststehenden Teil festgeklammert sind, wobei mindestens der eine verschwenkbare Spritzkopfteil als innerer verschwenkbarer Spritzkopfteil zwischen einem äußeren verschwenkbaren und dem feststehenden Spritzkopfteil angeordnet ist.

Dieser Spritzkopf gemäß dem einleitenden Teil des Anspruchs 1, ist mit vier ausschwenkbaren Spritzkopfteilen aus der EP 0270 816 bekannt geworden.

Dieser Spritzkopf ist für Extrusionsanlagen mit mehreren Extrudern, wie sie oftmals in der Reifenindustrie zur Herstellung von z.B. Laufstreifen oder Seitenstreifen benutzt werden, von besonderem Vorteil. Denn ein solcher Spritzkopf zeichnet sich vor allem dadurch aus, daß von den vorhandenen mehreren verschwenkbaren Spritzkopfteilen nur diejenigen z.B. für Reinigungszwecke bei einem Mischungswechsel in einem der Extruder geöffnet werden können, die durch eine Zuhaltung aneinandergepreßt sind, nicht aber die von der anderen Zuhaltung zusammengehaltenen beweglichen Spritzkopfteile. Auch der andere, von der gleichen Zuhaltung zugehaltene innere bewegliche Spritzkopfteil muß geöffnet und auch gereinigt werden. Denn mit dem öffnen einer Zuhaltung werden beide Spritzkopfteile, der innere ebenso wie der äußere, durch den Restdruck in den Extrusionskanälen aufgeschwenkt.

Dieses Problem der alleinigen Öffnung eines einzigen äußeren Kanals im Spritzkopf wird von der DE-A-36 37 731 gelöst, jedoch mit einer Zuhaltung, die völlig anders aufgebaut ist: Dieser Spritzkopf besitzt einen hydraulisch verschiebbaren Zugrahmen, mit dem die beiden inneren verschwenkbaren Spritzkopfteile gemeinsam direkt am feststehenden Spritzkopfteil im Betrieb festgeklammert werden und der zwei, weitere verschwenkbare Rahmen mit hydraulischen Spannmitteln trägt. Diese dienen dazu, die äußeren verschwenkbaren Spritzkopfteile an die inneren verschwenkbaren Spritzkopfteile anzupressen.

Dieser Spritzkopf weist aber auch den Nachteil auf, daß, wenn ein zwischen einem schwenkbaren innneren und dem feststehenden Spritzkopfteil liegender Kanal wegen Mischungswechsel zu reinigen ist, alle verschwenkbaren Spritzkopfteile zu lösen und zu reinigen sind. Denn der Hauptzugrahmen ist für die Öffnung dieses einen (Mittel-)Kanales zu verschieben, wodurch alle Kanäle geöffnet werden.

Zur Gesamtöffnung des Spritzkopfes müssen alle diese auf Zug beanspruchten Klemmteile zur Seite verschwenkt werden, die Klemmvorrichtungen für die äußeren verschwenkbaren Spritzkopfteile mitsamt den Hydraulik-Kolben-Zylindereinheiten.

Die Erfindung vermeidet die Nachteile des Standes der Technik. Es ist die Aufgabe der Erfindung, für einen Spritzkopf mit mehr als zwei beweglichen Teilen, der sich so öffnen läßt, daß nur der jeweils gewünschte Extrusionskanal geöffnet frei liegt, während der andere Extrusionskanal verschlossen bleibt, eine einfache raumsparende Konstruktion zu schaffen, die einen einfachen Bewegungsablauf aufweist.

Die Erfindung löst diese Aufgabe dadurch, daß jeder am festen Spritzkopfteil anliegende innere bewegliche Spritzkopfteil beidseitig durch je einen verschiebbaren Bolzen am festen Spritzkopfteil befestigt ist.

Dadurch ist eine einfache raumsparende Konstruktion geschaffen, die einen einfachen Bewegungsablauf aufweist.

Dieser Spritzkopf wird sehr einfach in seiner Konstruktion und Bedienung, wenn der verschiebbare Bolzen die Kolbenstange einer Kolbenzylindereinheit oder ein dem entsprechendes Vorsatzteil ist.

Für den Befestigungsvorgang ist es vorteilhaft, wenn der Bolzen eine keilförmige Fläche aufweist und wenn die Öffnung im anderen Kopfteil ebenfalls keilförmig ist.

Dabei ist der Bolzen so zu bemessen, daß der Bolzen und die Kolbenzylindereinheit in ihren Abmessungen derart ausgelegt sind, daß sie zwischen den Kopfteilen dichtend den Restmassedruck im jeweiligen Fließkanal bei entfernter Spritzleiste aufzufangen vermögen.

Die Befestigung der Kolbenzylindereinheit erfolgt zweckmäßigerweise derart, daß am feststehenden Spritzkopfteil eine die Kolbenzylindereinheit tragende Konsole angebracht ist.

Die lösbare Verbindung kann aber auch anders ausgeführt werden, z.B. so, daß die lösbare Verbindung eine Kolbenzylindereinheit ist, die einerseits am verschwenkbaren Spritzkopfteil, andererseits am feststehenden Spritzkopfteil angelenkt ist.

Das Wesen der Erfindung ist nachstehend anhand eines in den Zeichnungen schematisch dargestellten Ausführungsbeispieles näher erläutert. Es zeigen:

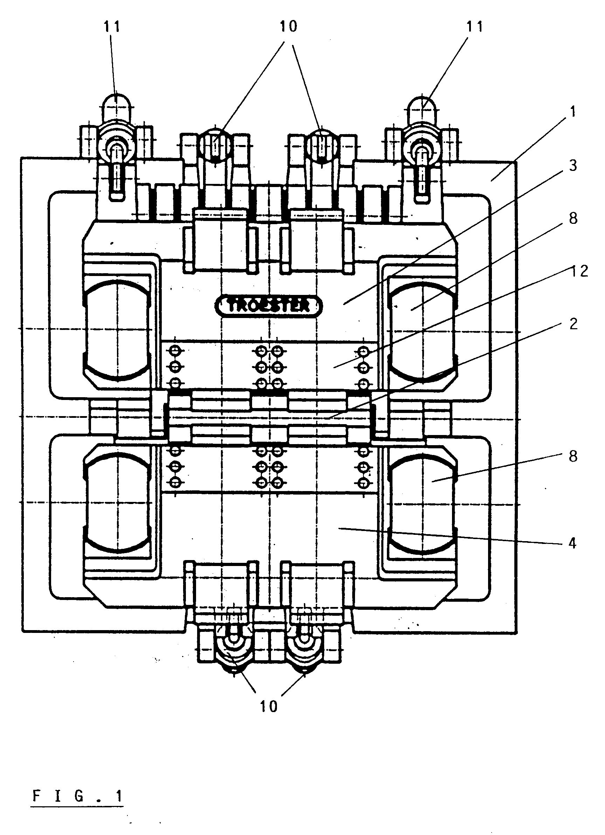

- Fig.1: eine Frontalansicht des Spritzkopfes,

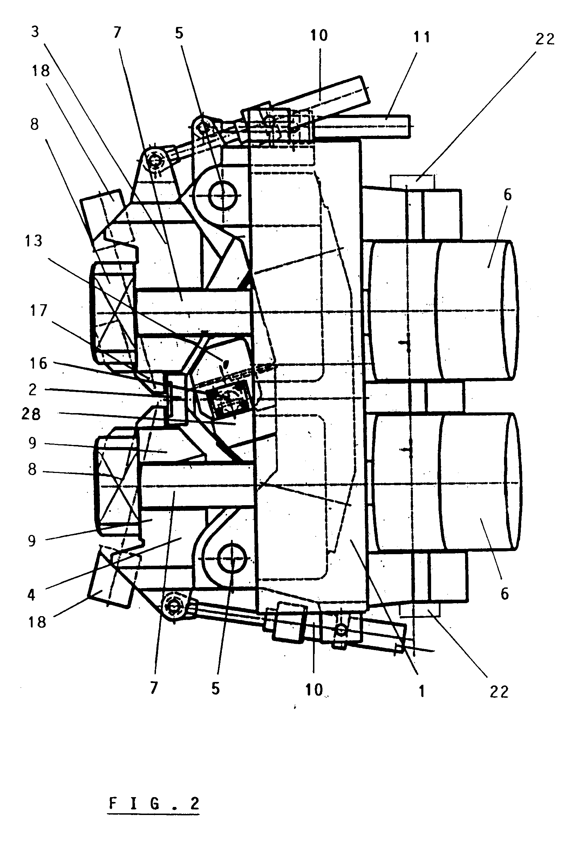

- Fig.2: eine Seitenansicht des Spritzkopfes,
- Fig.3: eine Draufsicht auf den Spritzkopf,
- Fig.4: eine vergrößert dargestellte Teilausicht aus dem Zentrum des Spritzkopfes,
- Fig.5: eine Ansicht der für die Lagerung zusammen dargestellten Kolbenzylindereinheiten,
- Fig.6: Koppel-Kolbenzylindereinheit für das Ankoppeln eines beweglichen Spritzkopfteiles an das feststehende Spritzkopfteil,
- Fig.7: einen Schnitt durch die Anordnung des Feststellungsbolzens,
- Fig.8: eine Seitenansicht des Spritzkopfes in teilweise geöffnetem Zustand, nämlich mit geöffnetem äußeren Teil der oberen Spritzkopfhälfte,
- Fig.9: eine Seitenansicht des Spritzkopfes in teilweise geöffnetem Zustand, nämlich mit geöffnetem äußeren und geöffnetem inneren Spritzkopfteil in der oberen Spritzkopfhälfte,
- Fig.10: einen Spritzkopf, teilweise im Schnitt, für eine Extrusionsanlage mit drei Extrudern,
- Fig.11: eine Seitenansicht eines Spritzkopfes für eine Extrusionsanlage mit vier Extrudern.

Der Spritzkopf für eine Extrusionsanlage der Kautschuk oder Kunststoff verarbeitenden Industrie besteht aus einem an der Extrusionsanlage anzuflanschenden feststehenden Spritzkopfteil 1 und mindestens einem an der Spritzleiste 2 anliegenden für Reinigungszwecke verschwenkbarem Spritzkopfteil 3,4, der mittels eines Gelenkes 5 an dem feststehenden Teil 1 angelenkt ist und der mittels von beidseitig angeordneten als auf Zug beanspruchte Verriegelungen dienende Kolbenzylindereinheiten 6 am feststehenden Teil 1 festzuklammern ist. Diese Kolbenzylindereinheiten 6 weisen eine Kolbenstange 7 auf, die an ihrem freien Ende mit einer hammerkopfförmigen Knagge 8 versehen ist. Diese hammerkopfförmige Knagge 8 greift hinter Vorsprünge 9 an den beweglichen Spritzkopfteilen 3,4 oder direkt an den beweglichen Spritzkopfteilen 3,4 an. Die Kolbenzylindereinheiten 6 dienen als Verriegelungen und weisen daher einen nur kurzen, aber mit einem großen Durchmesser versehenen Zylinder auf. Neben diesen Kolbenzylindereinheiten 6 sind weitere Kolbenzylindereinheiten 10 für das Verschwenken der beweglichen äußeren Spritzkopfteile 3,4 und je eine zusätzliche Kolbenzylindereinheit 11 für die Verschwenkung der inneren Spritzkopfteile 12 zwischem dem äußeren Spritzkopfteil 3, (4) und dem festen Spritzkopfteil 1 vorgesehen. Diese inneren Spritzkopfteile weisen auf beiden Seiten zum festen Kopfteil hingezogene, das innere Spritzkopfteil 1 überfassende Seitenflansche 13 auf, die mittels eines Bolzens 14, der durch die Kolbenstange einer weiteren Kolbenzylindereinheit 15 gebildet ist, am feststehenden Spritzkopfteil 1 arretierbar sind. Dieser Bolzen 14 greift in eine Öffnung 16 im beweglichen Spritzkopfteil 3, (4) ein und sichert dadurch die Arretierung der Lage der inneren beweglichen Spritzkopfteile (12) zum feststehenden Spritzkopfteil 1 dichtend gegen den Restmassedruck.

Die Spritzleiste 2 ist in herkömmlicher Weise in ihrer Lage durch Schieber 17 gesichert, welche durch weitere Kobenzylindereinheiten 18 verschiebbar sind.

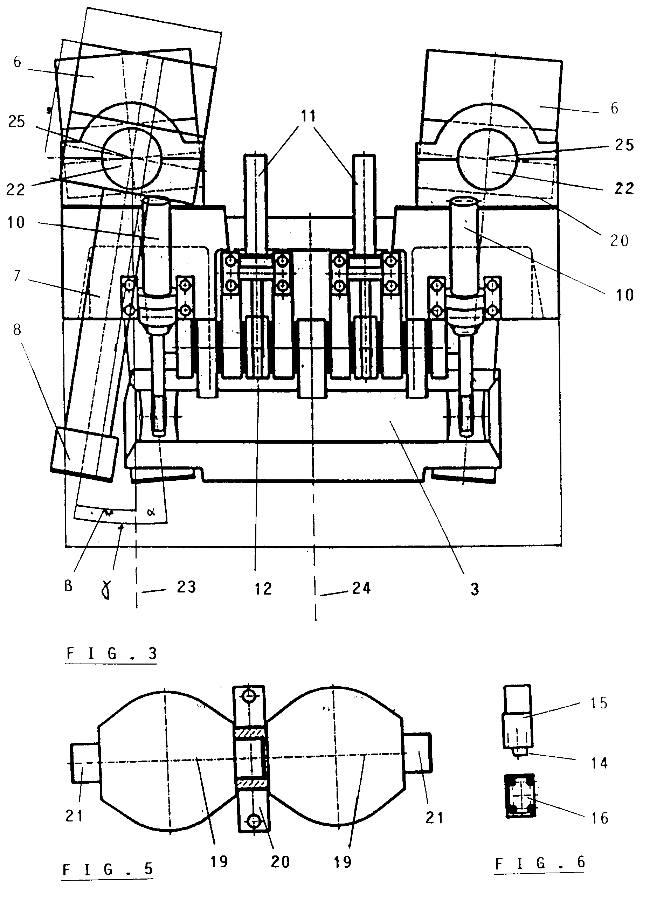

Die als Zugriegel dienenden Kolbenzylindereinheiten 6 sind gelenkig um eine Achse 19 verschwenkbar gelagert, und zwar mittels Lagerböcken 20, von denen in Fig.5 nur der mittlere gezeichnet ist. Die Kolbenzylindereinheiten 6 weisen zu beiden Seiten Lagerzapfen 21 auf. An den einander zugewandten Seiten der Kolbenzylindereinheiten 6 ist der eine Lagerzapfen hohl, so daß der andere Lagerzapfen in ihn hineinfassen kann. Die Lage der Verschwenkachse 19 der Kolbenzylindereinheiten 6 ist dabei so gewählt, daß sie durch den vorderen Zylinderteil verläuft.

An den Kolbenzylindereinheiten 6 ist je ein Servomotor bzw. je eine weitere Kolbenzylindereinheit 22 für die Verschwenkung der Kolbenzylindereinheiten 6 im entklammerten Zustand in Außerbetriebsstellung vorgesehen.

Die als Zugriegel dienenden Kolbenzylindereinheiten 6 sind zu beiden Seiten des Spritzkopfes um einen spitzen Winkel γ zu zwei Seiten einer gedachten Ebene 23, die parallel zur Mittelachse 24 des Spritzkopfes verläuft, verschwenkbar. Dabei sind die Kolbenzylindereinheiten 6 im Betriebszustand des Spritzkopfes auf die Seite verschwenkt, welche dem Spritzkopf zugewandt ist (Winkel α), während sie in Öffnungsstellung des beweglichen Spritzkopfteiles auf der anderen Seite der gedachten Ebene 23 befindlich sind (Winkel β). Dabei ist am beweglichen Spritzkopfteil 3, 4 die Anlagefläche für die Knagge 8 an der Kolbenstange 7 dem spitzen Winkel α entsprechend schräg nach innen geneigt.

In Fig. 4 ist das Loch 16 für die Aufnahme des Bolzens 14 in einer Platte 26 dargestellt, welche mit Schrauben 27 an dem Seitenflansch 13 angebracht ist. Dieser Seitenflansch 13 ist seitlich an dem inneren beweglichen Spritzkopfteil 12 zu dessen beiden Seiten angebracht.

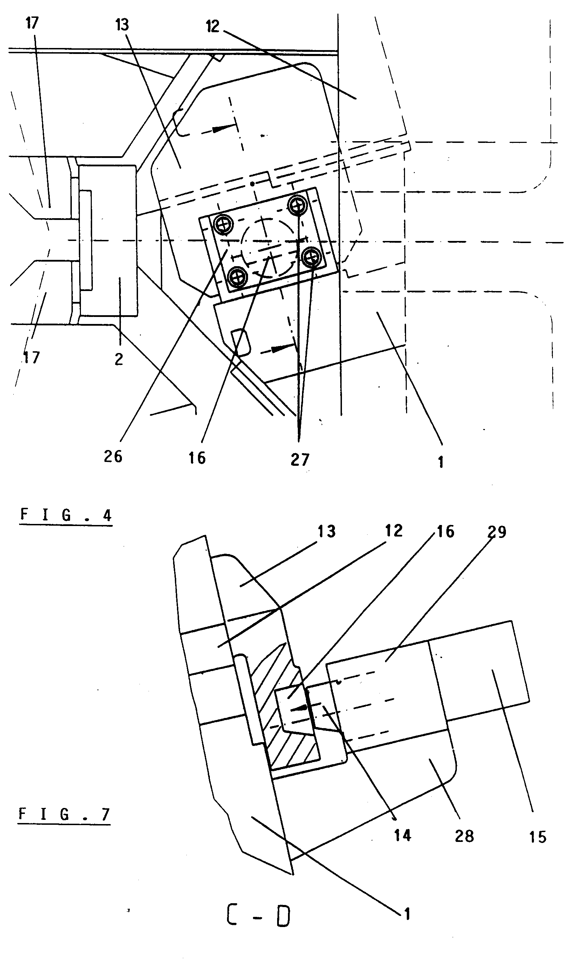

Der in dieses Loch 16 einzuschiebende Bolzen 13 ist, wie die Fig. 7 zeigt, durch die Kolbenstange der Kolbenzylindereinheit 15 realisiert, welche über die Spannvorrichtung 29 und die Konsole 28 am festen Spritzkopfteil 1 gelagert ist.

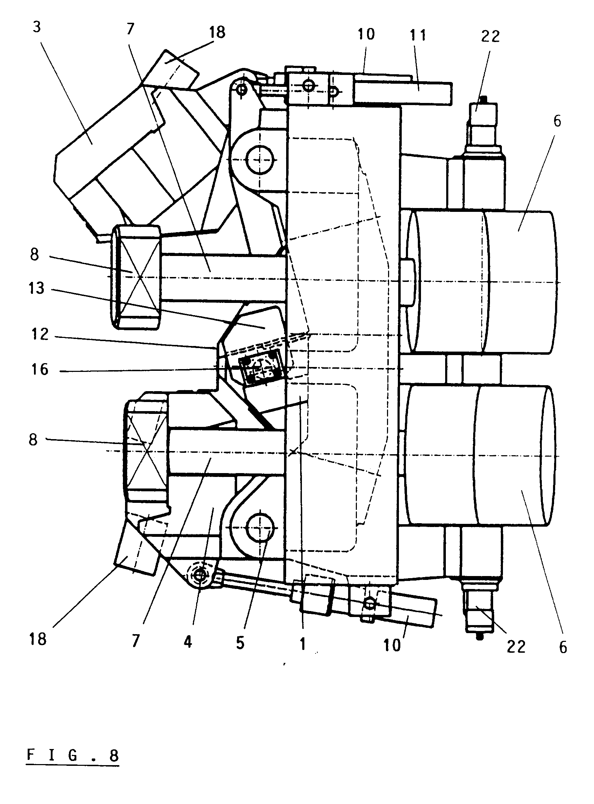

In Fig. 8 ist die obere Spritzkopfhälfte geöffnet. Das äußere bewegliche Spritzkopfteil 3 ist mit Hilfe der Kolbenzylindereinheit 10 hochgeschwenkt. Der innere bewegliche Spritzkopfteil 12 hingegen ist durch den Bolzen 14 noch fest mit dem feststehenden Spritzkopfteil 1 verbunden.

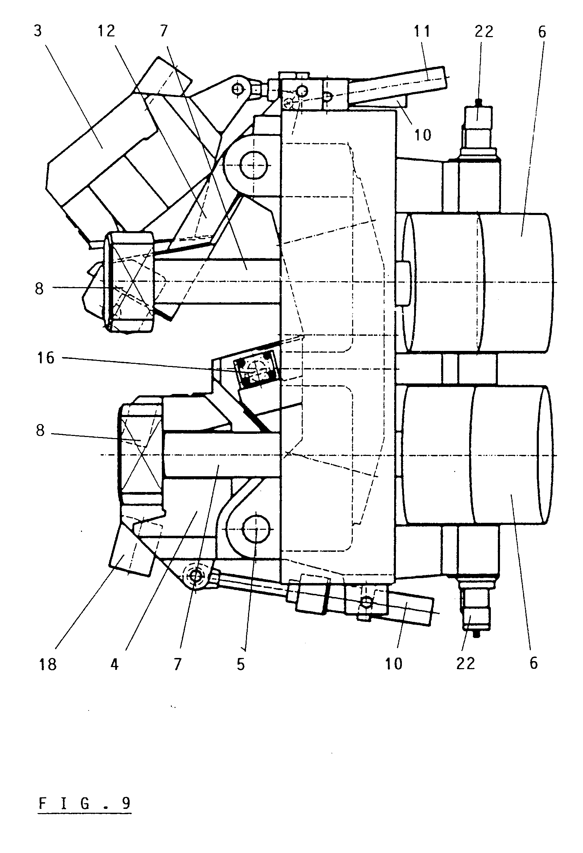

Im Ausführungsbeispiel der Fig. 9 ist dieser in Fig. 8 noch fest mit dem feststehenden Spritzkopfteil 1 verbundene innere, verschwenkbare Spritzkopfteil 12 nach Herausziehen des Bolzens 14 aus dem Loch 16 ebenfalls geöffnet, während die untere Spritzkopfhälfte noch fest verschlossen ist.

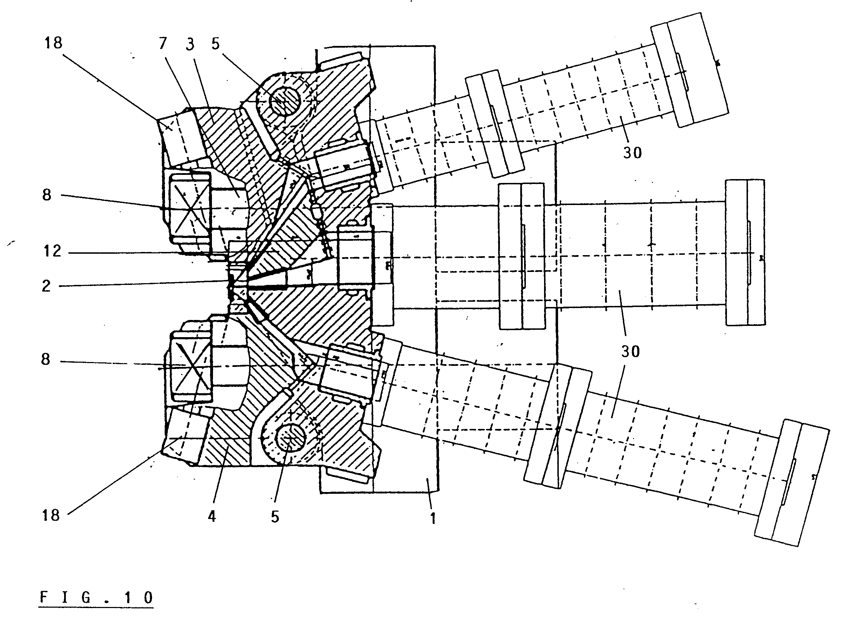

Aus Fig. 10 sind bei einer Extrusionsanlage mit drei Extrudern die Fließwege in dem geschnittenen Spritzkopfteil ersichtlich.

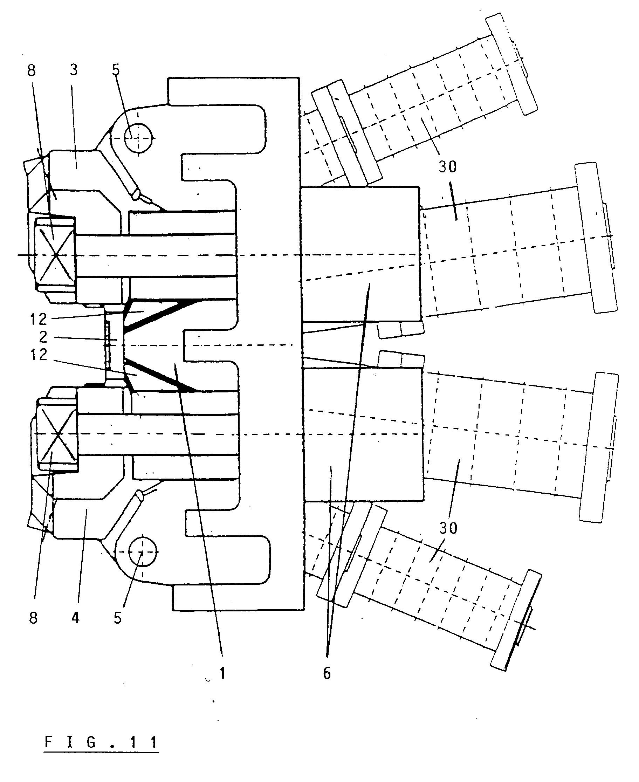

Fig. 11 zeigt eine Ansicht einer Extrusionsanlage mit vier Extrudern 30.

### Liste der Bezugszeichen

- 1: feststehendes Spritzkopfteil
- 2: Spritzleiste
- 3: bewegliches Spritzkopfteil
- 4: bewegliches Spritzkopfteil
- 5: Gelenk
- 6: Kolbenzylindereinheit
- 7: Kolbenstange
- 8: Knagge
- 9: Vorsprung
- 10: Kolbenzylindereinheit
- 11: Kolbenzylindereinheit
- 12: innerer beweglicher Spritzkopfteil
- 13: Seitenflansche
- 14: Bolzen mit Keilfläche
- 15: Kolbenzylindereinheit
- 16: Öffnung mit Keilfläche
- 17: Schieber
- 18: Kolbenzylindereinheit
- 19: Schwenkachse
- 20: Lagerbock
- 21: Lagerzapfen
- 22: Servomotor oder Kolbenzylindereinheit
- 23: gedachte Ebene
- 24: Mittelachse
- 25: Gelenk
- 26: Platte
- 27: Schraube
- 28: Konsole
- 29: Spannvorrichtung
- 30: Extruder
- α: spitzer Winkel geringer Größe
- β: äußerer spitzer Winkel
- γ: innerer spitzer Winkel

## Patentansprüche

1. Spritzkopf für eine Extrusionsanlage der Kautschuk oder Kunststoff verarbeitenden Industrie,
bestehend aus einem an der Extrusionsanlage anzuflanschenden feststehenden Spritzkopfteil (1) und mindestens zwei an der Spritzleiste (2) anliegenden für Reinigungszwecke verschwenkbaren Spritzkopfteilen (3,4), die mittels einer Gelenkanordnung (5) an dem feststehenden Spritzkopfteil (1) angelenkt sind und mittels von beidseitig angeordneten Kolbenzylindereinheiten (6) am feststehenden Teil festgeklammert sind,
wobei mindestens der eine verschwenkbare Spritzkopfteil als innerer verschwenkbarer Spritzkopfteil (12) zwischen einem äußeren verschwenkbaren Spritzkopfteil (3,4) und dem feststehenden Spritzkopfteil (1) angeordnet ist,
dadurch gekennzeichnet,
daß jeder am festen Spritzkopfteil (1) anliegende innere bewegliche Spritzkopfteil (12) beidseitig durch je einen verschiebbaren Bolzen (14) am festen Spritzkopfteil (1) befestigt ist.

2. Spritzkopf nach Anspruch 1,
dadurch gekennzeichnet,
daß der verschiebbare Bolzen (14) die Kolbenstange einer Kolbenzylindereinheit (15) oder ein dem entsprechendes Vorsatzteil ist.

3. Spritzkopf nach Anspruch 1 und 2,
dadurch gekennzeichnet,
daß der Bolzen (14) eine keilförmige Fläche aufweist und daß die Öffnung im inneren Spritzkopfteil (12) bzw. im Seitenflansch (13) ebenfalls keilförmig ist.

4. Spritzkopf nach Anspruch 1 bis 3,
dadurch gekennzeichnet,
daß der Bolzen (14) und die Kolbenzyl indereinheit (15) in ihren Abmessungen derart ausgelegt sind, daß sie zwischen den Kopfteilen (1,12) dichtend den Restmassedruck im jeweiligen Fließkanal bei entfernter Spritzleiste (2) aufzufangen vermögen.

5. Spritzkopf nach Anspruch 1,
dadurch gekennzeichnet,
daß am feststehenden Spritzkopfteil (1) eine die Kolbenzylindereinheit (15) tragende Konsole (28) angebracht ist

6. Spritzkopf nach Anspruch 1,
dadurch gekennzeichnet,
daß jeder am festen Spritzkopfteil (1) anliegende bewegliche innere Spritzkopfteil (12) beidseitig durch je einen, mit einer Kolbenzylindereinheit über einen Hebel drehbaren, Rundkeil und einem Zapfen am festen Spritzkopfteil befestigt ist.

## Claims

1. Extrusion head for an extrusion installation for the rubber or plastics processing industry, consisting of a fixed extrusion head part (1) to be flanged to the extrusion installation and of at least two extrusion head parts (3, 4) which bear on the extrusion strip (2) and are pivotable for cleaning purposes and which are articulated by means of a hinge arrangement (5) to the fixed extrusion head part (1) and are clamped securely to the fixed part by means of piston and cylinder units (6) disposed on both sides, whereby at least one pivotable extrusion head part is disposed as inner pivotable extrusion head part (12) between an outer pivotable extrusion head part (3, 4) and the fixed extrusion head part (1), characterised in that each inner movable extrusion head part (12) bearing on the fixed extrusion head part (1) is secured on both sides by a displaceable bolt (14) to the fixed extrusion head part (1).

2. Extrusion head according to claim 1, characterised in that the displaceable bolt (14) is the piston rod of a piston and cylinder unit (15) or an ancillary part corresponding to it.

3. Extrusion head according to claim 1 and 2, characterised in that the bolt (14) exhibits a wedge-shaped face and in that the opening in the inner extrusion head part (12) or in the side flange (13) is also wedge-shaped.

4. Extrusion head according to claims 1 to 3, characterised in that the dimensions of the bolt (14) and the piston and cylinder unit (15) are such that they are able to bear the residual mass pressure in the flow passage when the extrusion strip (2) is removed, sealing between the head parts (1, 12).

5. Extrusion head according to claim 1, characterised in that a bracket (28) carrying the piston and cylinder unit (15) is attached to the fixed extrusion head part (1).

6. Extrusion head according to claim 1, characterised in that each moveable inner extrusion head part (12) bearing on the fixed extrusion head part (1) is secured to the fixed extrusion head part on both sides by a round key pivotable with a piston and cylinder unit by means of a lever, and a pin.

## Revendications

1. Tête d'extrusion pour une ligne d'extrusion dans l'industrie de transformation du caoutchouc ou des matières plastiques,
constituée d'une partie de tête d'injection (1) stationnaire, montée par flasquage sur la ligne d'extrusion, et d'au moins deux parties de tête d'injection (3, 4) en appui sur la bande d'injection (2) et pouvant pivoter à des fins de nettoyage, en étant articulée sur la partie de tête d'injection (1) stationnaire au moyen d'un mécanisme d'articulation (5) et bloqué par cramponnement sur la partie stationnaire, au moyen d'unités à piston et cylindre (6) disposées sur les deux côtés,
au moins une partie de tête d'injection pouvant pivoter, réalisée sous la forme de partie de tête d'injection (12) pivotante interne, étant disposée entre une partie de tête d'injection (3, 4) extérieure pouvant pivoter et la partie de tête d'injection (1) stationnaire,
caractérisée en ce que
chaque partie de tête d'injection (12) mobile, interne, appuyant sur la partie de tête d'injection (1) stationnaire est fixée sur deux côté chaque fois au moyen d'un boulon (14) déplaçable.

2. Tête d'injection selon la revendication 1,
caractérisée en ce que
le boulon (14) déplaçable est la tige de piston d'une unité à piston et cylindre (15), ou bien une partie adaptatrice lui correspondant.

3. Tête d'injection selon la revendication 1 ou 2, caractérisée en ce que le boulon (14) présente une face cunéiforme, et en ce que l'ouverture, ménagée dans la partie de tête d'injection interne (12) et/ou dans la bride latérale (13), est également cunéiforme.

4. Tête d'injection selon les revendications 1 à 3, caractérisée en ce que le boulon (14) et l'unité à piston et cylindre (15) sont conçus, concernant leurs dimensions, de manière à pouvoir capter entre les parties de tête (1, 12), de façon étanche la pression de masse résiduelle dans le canal d'écoulement respectif, lorsque la bande d'injection (2) est enlevée.

5. Tête d'injection selon la revendication 1, caractérisée en ce qu'une console (28) portant l'unité à piston et cylindre (15) est montée sur la partie de tête d'injection (1) stationnaire.

6. Tête d'injection selon la revendication 1, caractérisée en ce que chaque partie de tête d'injection interne (12) mobile, appuyant sur la partie de tête d'injection (1) stationnaire, est fixée sur les deux côtés, respectivement, d'une part au moyen d'un élément cunéiforme rond pouvant tourner à l'aide d'un levier, au moyen d'une unité à piston et cylindre, et d'autre part sur la partie de tête d'injection stationnaire, au moyen d'un tourillon.
